# FASCICULE DE BREVET EUROPEEN

(11) **EP 4 390 043 B1**
(45) Date de publication et mention de la délivrance du brevet: **08.10.2025**
(21) Numéro de dépôt: 23218948.0
(22) Date de dépôt: 21.12.2023
(51) Int. Cl.: E06B 9/17, E06B 9/72, H02J 7/34, H02S 20/22, H02J 7/35, E06B 9/24, E06B 9/68

(54) **SYSTÈME D'OCCULTATION COMPORTANT UN CONNECTEUR DE RECHARGE RAPIDE**
VERDUNKELUNGSSYSTEM MIT SCHNELLLADEANSCHLUSS
SHADING SYSTEM WITH QUICK RECHARGE CONNECTOR

(30) Priorité: 23.12.2022 FR 2214450
(43) Date de publication de la demande: 26.06.2024
(73) Titulaire: Somfy Activites SA, 74300 Cluses (FR)
(72) Inventeur: PAILLERET, Guillaume, 74300 Cluses (FR); ROUSSEAU, Fabien, 74300 Cluses (FR); FAURE, David, 74300 Cluses (FR)
(74) Mandataire: Bugnion Genève

(56) Documents cités:
- EP-A1- 3 800 320
- FR-A1- 3 081 492
- FR-A1- 3 115 555
- US-A1- 2019 277 086

## Description

### DOMAINE TECHNIQUE ET ART ANTERIEUR

La présente invention se rapporte à un système d'occultation à actionnement électrique destiné à déplacer un élément d'occultation.

Une installation d'occultation à actionnement électrique comporte un élément d'occultation tels qu'un volet ou un store, et un système d'occultation comportant un actionneur destiné à enrouler ou dérouler le store ou volet, une batterie rechargeable pour alimenter l'actionneur. Certaines installations comportent un panneau photovoltaïque relié à la batterie pour la recharger, ce qui permet de ne pas avoir à disposer d'une alimentation secteur à proximité de la zone de mise en place de l'installation d'occultation. Cependant la recharge de la batterie ne peut s'effectuer que lorsque le panneau photovoltaïque est suffisamment éclairé. Le document FR 3 115 555 A1 décrit un système d'occultation connu.

Il est donc souhaitable de prévoir de pouvoir recharger la batterie par un dispositif de recharge par exemple rapide, désigné powerbank en terminologie anglosaxonne, pour pallier l'insuffisance d'énergie électrique fournie par le panneau photovoltaïque, par exemple dans le cas d'une météo particulièrement pluvieuse prolongée et/ou d'un usage intensif de l'installation et / en présence d'obstacles solaires Pour opérer une recharge par un dispositif de recharge autre que le panneau photovoltaïque, il est généralement requis de démonter l'installation pour accéder au connecteur de la batterie, et permettre sa connexion au dispositif de recharge. Une telle opération est donc complexe d'autant plus que la batterie est peu accessible. En outre le risque de détérioration de l'installation est non négligeable du fait du montage et du démontage.

### EXPOSÉ DE l'INVENTION

C'est par conséquent un but de la présente invention d'offrir un système d'occultation alimenté par panneau photovoltaïque permettant une opération de recharge de la batterie simplifiée par un dispositif d'alimentation autre que le panneau photovoltaïque.

Le but énoncé ci-dessus est atteint par un système d'occultation comportant un actionneur pour l'entraînement entre plusieurs d'un élément d'occultation, au moins une batterie pour alimenter l'actionneur, un dispositif d'alimentation électrique configuré pour recharger la batterie, ledit dispositif comportant au moins un panneau photovoltaïque. Le dispositif d'alimentation électrique comporte un premier connecteur connectant électriquement le dispositif d'alimentation électrique à la batterie pour la recharger via le panneau photovoltaïque, et un deuxième connecteur permettant la connexion d'un dispositif d'alimentation électrique externe à la batterie pour recharger la batterie à la place du panneau photovoltaïque ou simultanément.

Ce deuxième connecteur permet alors une connexion rapide et simplifiée d'un dispositif d'alimentation électrique externe à la batterie sans avoir à démonter le système, en particulier l'actionneur. En effet le dispositif d'alimentation électrique muni d'un panneau photovoltaïque est facilement accessible de l'extérieur du système, puisqu'il est disposé de sorte à être exposé au rayonnement lumineux.

Le dispositif d'alimentation électrique comporte un boîtier portant le panneau photovoltaïque et le deuxième connecteur qui est accessible de l'extérieur du boîtier. Le dispositif d'alimentation électrique forme un module facilement connectable au bloc batterie et facilement accessible pour une recharge rapide du bloc batterie. En outre ce dispositif d'alimentation électrique complet est aisément positionnable soit sur le coffre du système d'occultation, soit sur le vitrage.

De préférence, le dispositif d'alimentation électrique externe est un dispositif de recharge rapide type powerbank ou branché sur le secteur. Cette recharge peut alors être aisément réalisée par toute personne.

En outre, en disposant le deuxième connecteur sur le dispositif d'alimentation électrique, le deuxième connecteur est relié à l'unité d'interface d'alimentation électrique du dispositif d'alimentation électrique à énergie solaire et la recharge est commandée par cette interface. La mise en œuvre d'une unité d'interface dédiée à la recharge par un dispositif d'alimentation électrique externe est avantageusement éliminée.

De manière préférée, l'unité d'interface d'alimentation électrique comporte des moyens de protection du panneau photovoltaïque vis-à-vis de la tension/du courant délivrés par le dispositif d'alimentation externe, ces moyens comportant par exemple au moins une diode.

De manière particulièrement avantageuse, le deuxième connecteur est un connecteur de type USB, très avantageusement de type USB-C^{®} et l'actionneur et les dispositifs d'alimentation supportent de manière préférée la technologie PD pour Power Delivery en terminologie anglo-saxonne ou Fourniture d'énergie, et de manière encore plus préférée la technologie PD et la technologie PPS pour Programmable Power Supply en terminologie anglo-saxonne ou Alimentation programmable, associées à la norme USB version 3.0 et suivante.

La technologie de fourniture d'énergie PD permet de délivrer une puissance plus importante à la batterie et de réaliser des charges plus rapides qu'un connecteur non compatible avec cette technologie.

Puisque la norme USB 3.0 PD PPS permet d'ajuster la puissance de charge selon le besoin de la batterie, il en résulte une surchauffe réduite, une plus longue durée de vie de la batterie et une recharge optimale.

La mise en œuvre d'un connecteur USB-C^{®} permet très avantageusement un échange de données avec l'actionneur. Il est alors envisageable d'utiliser ce deuxième connecteur pour collecter des informations sur le système et/ou assurer son réglage. Par exemple, le connecteur peut permettre de réaliser une mise à jour du logiciel notamment, ou de communiquer à l'actionneur des informations sur son environnement, telles que l'azimut de la façade, la géolocalisation, etc.

Un objet de la présente demande est alors un système d'occultation comportant un actionneur pour l'entraînement entre plusieurs positions d'un écran de protection solaire ou d'occultation, et un bloc d'alimentation électrique dudit actionneur, l'actionneur comprenant un moteur électrique, un réducteur, au moins une batterie alimentant le moteur électrique, un circuit de contrôle, le bloc d'alimentation électrique étant configuré pour recharger la au moins une batterie électrique, ledit bloc d'alimentation comportant un boîtier, au moins un panneau photovoltaïque porté par au moins une face du boîtier, une unité d'interface d'alimentation électrique configurée pour gérer la recharge de la batterie par le panneau photovoltaïque, ledit panneau photovoltaïque étant relié à l'unité d'interface d'alimentation électrique par un premier connecteur. Le bloc d'alimentation électrique comporte également un deuxième connecteur relié à l'unité d'interface d'alimentation électrique configuré pour au moins permettre la connexion à un dispositif d'alimentation électrique externe afin de recharger la batterie électrique à la place du panneau photovoltaïque ou avec le panneau photovoltaïque, le deuxième connecteur étant porté par le boîtier de sorte à être directement accessible de l'extérieur dudit boîtier, le bloc d'alimentation comportant également des moyens de protection électrique du panneau photovoltaïque par rapport au dispositif d'alimentation externe. De préférence, le bloc d'alimentation électrique comporte des moyens de protection du deuxième connecteur contre l'eau et la poussière.

Dans un exemple avantageux, le deuxième connecteur est un connecteur répondant à la norme USB-C^{®}. Le deuxième connecteur peut être configuré pour transmettre des informations suivant une technologie de fourniture d'énergie PD (Power Delivery en terminologie anglo-saxonne) et éventuellement selon une technologie d'alimentation programmable PPS (Programmable Power Supply en terminologie anglo-saxonne). Le deuxième connecteur est avantageusement configuré pour connecter un dispositif de configuration et pour permettre un échange de données entre le dispositif de configuration et le circuit de contrôle et/ou l'unité d'interface. Le système d'occultation peut comporter au moins un capteur d'au moins une condition extérieure, par exemple niveau le d'éclairement ou la température, et le système est avantageusement configuré pour transmettre les données au dispositif de configuration via le deuxième connecteur.

Dans un exemple de réalisation, le dispositif d'alimentation comporte plusieurs panneaux photovoltaïques connectés en parallèle.

Un autre objet de la présente demande est une installation d'occultation comportant un système d'occultation selon l'invention, un écran solidarisé à l'actionneur pour être entraîné par celui-ci, un coffre logeant l'actionneur et au moins en partie l'écran. Le bloc d'alimentation électrique peut être disposé au moins en partie à l'extérieur du coffre de sorte que le panneau photovoltaïque soit soumis au rayonnement lumineux.

Très avantageusement, la disposition du bloc d'alimentation électrique est telle que le deuxième connecteur est accessible de l'extérieur du coffre.

Dans un exemple, le boîtier est destiné à être fixé sur une face extérieure du coffre. Dans un autre exemple, le boîtier est destiné à être fixé sur un vitrage destine à être occulté. Le boîtier peut être formé par une partie dudit coffre.

### BREVE DESCRIPTION DES DESSINS

La présente demande sera mieux comprise à l'aide de la description qui va suivre et des dessins en annexe sur lesquels :
- La figure 1A est une représentation schématique d'un exemple de réalisation d'un système d'occultation selon l'invention,
- La figure 1B est une vue éclatée de l'actionneur de la figure 1A et une représentation schématique du bloc d'alimentation de la figure 1A,
- La figure 2A est une vue en perspective partielle d'un exemple d'installation d'occultation selon l'invention sans l'écran d'occultation,
- La figure 2B est une vue en perspective partielle de l'installation d'occultation de la figure 2A avec l'écran d'occultation et sans l'actionneur,
- LA figure 3 est une représentation d'un schéma électrique d'un exemple de réalisation du système d'occultation des figures 1A et 1B,
- La figure 4A est une vue en perspective d'un exemple de connecteur de charge adapté à l'invention,
- La figure 4B est une vue en perspective d'un exemple de connecteur de recharge magnétique,
- La figure 5 est un organigramme d'un exemple d'un procédé de recharge d'un actionneur selon l'invention,
- La figure 6 est une représentation schématique d'un exemple de réalisation du bloc d'alimentation comportant plusieurs panneaux photovoltaïques.

### DESCRIPTION DÉTAILLÉE DE MODES DE RÉALISATION

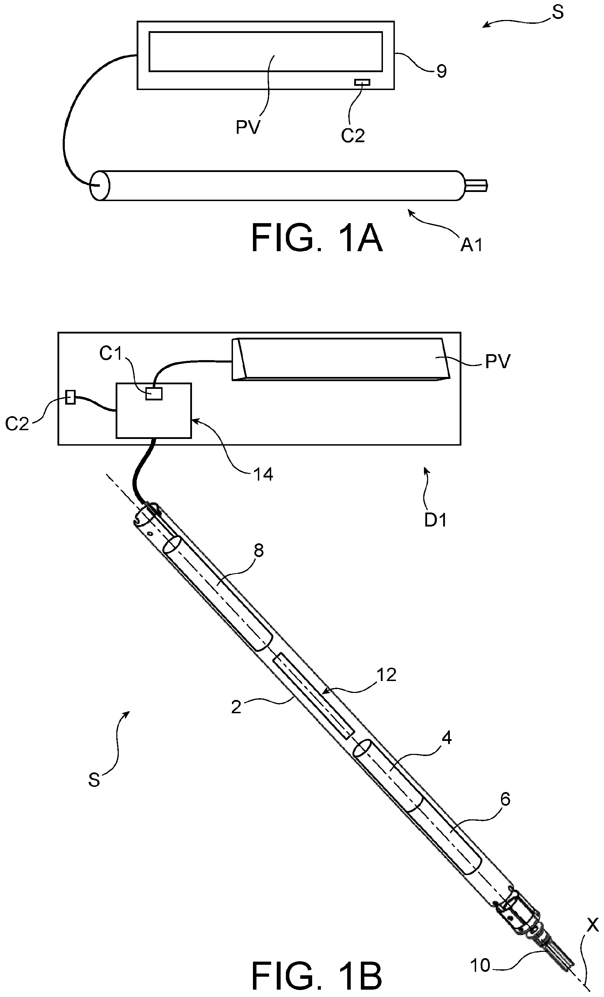

Sur la figure 1A et la figure 1B, on peut voir une représentation schématique d'un exemple d'un système d'occultation selon l'invention.

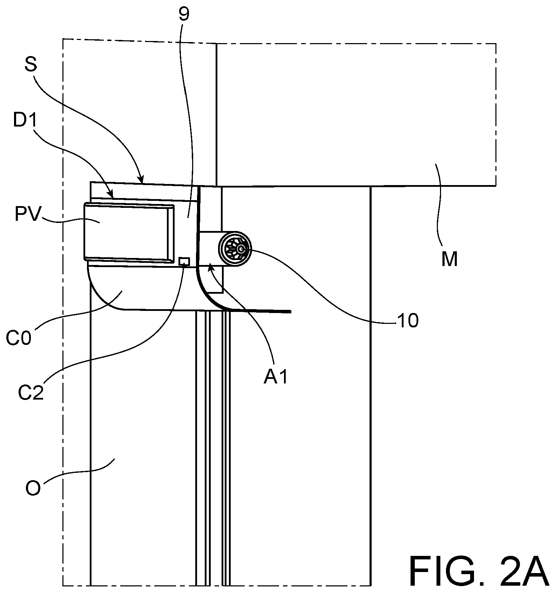

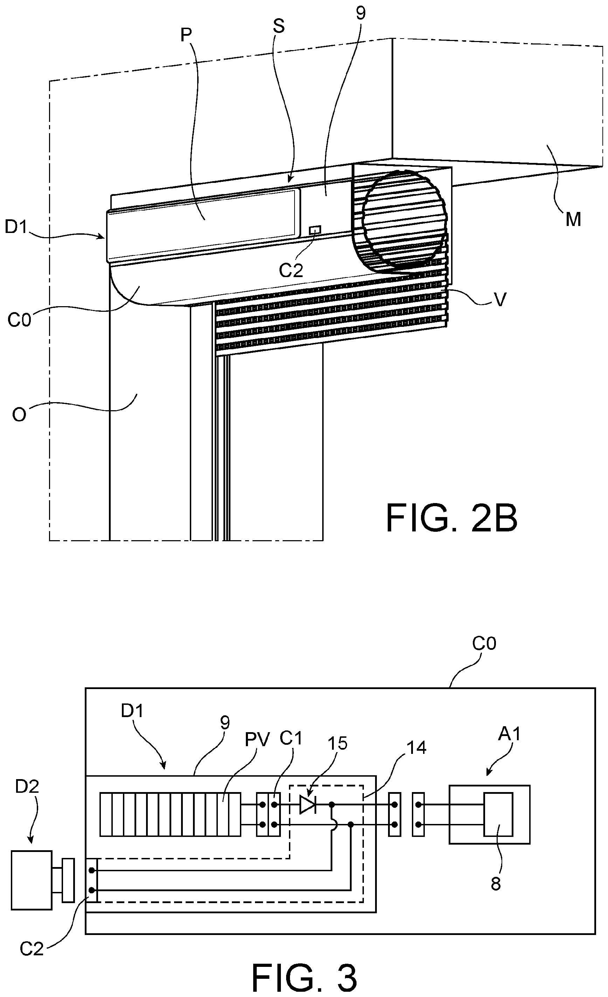

Sur la figure 2A et la figure 2B, on peut voir un exemple d'installation d'occultation selon l'invention mis en place dans une ouverture d'un bâtiment.

Sur la figure 3, on peut voir un exemple de schéma électrique du système d'occultation. Le système d'occultation S est destiné à entraîner un élément d'occultation entre plusieurs positions. L'élément d'occultation forme par exemple un écran de protection solaire (visible sur la figure 2A), tel qu'un store, volet ou autre. L'élément d'occultation ne fait pas partie du système d'occultation.

Sur les figures 2A et 2B, on peut voir l'installation d'occultation comportant le système d'occultation, l'élément d'occultation V et un coffre CO logeant le système d'occultation et au moins une partie de l'élément d'occultation. L'installation d'occultation est montée dans ou à proximité d'une ouverture O à occulter. L'ouverture est réalisée à travers un mur M d'une habitation

Le système comporte un actionneur A1 qui comporte un carter 2 de forme générale cylindrique de révolution d'axe X. L'actionneur A1 comporte une tête ou support de couple (non représenté), le carter 2 d'axe X, un moteur électrique 4 d'axe X, un réducteur 6. Le réducteur 6 se prolonge par un arbre de sortie 10 s'étendant le long de l'axe X destiné à entraîner en rotation un élément (non représenté) appartenant à l'écran ou un tube d'enroulement sur lequel est monté l'écran.

Le système S comporte également un bloc batterie 8 rechargeable destiné à fournir la puissance électrique au moteur électrique utile pour sa rotation.

Dans l'exemple représenté, le bloc batterie 8 est disposé à l'intérieur du carter de l'actionneur et est connecté au moteur. En variante le bloc batterie est situé à l'extérieur de l'actionneur, dans le coffre du volet, et est connecté électriquement à l'actionneur.

Le bloc batterie 8 comporte une ou plusieurs batteries électriques connectées en parallèle ou en série.

Le système d'occultation comporte également un bloc d'alimentation électrique D1 disposé à l'extérieur de l'actionneur, à distance de celui-ci et connecté à l'actionneur par au moins un câble électrique. Le bloc d'alimentation comporte un dispositif d'alimentation à énergie solaire destiné à alimenter électriquement la batterie afin de la recharger. Le dispositif d'alimentation comporte au moins un panneau photovoltaïque PV. Le dispositif d'alimentation est relié électriquement au bloc batterie 8.

Dans une autre variante, le bloc batterie peut être intégré au bloc d'alimentation.

Le panneau photovoltaïque PV est destiné à être exposé au rayonnement lumineux qu'il convertit en énergie électrique servant à la recharge du bloc batterie.

Le bloc d'alimentation électrique comporte de préférence un boîtier 9, par exemple un boîtier moulé en matériau plastique, supportant le panneau photovoltaïque, et par lequel le bloc d'alimentation D1 est fixée soit sur la façade de l'habitation, soit sur le vitrage de l'ouverture que le système équipe, soit sur le coffre du système.

De manière préférée, le boîtier 9 est conformé pour offrir une inclinaison optimisée du panneau photovoltaïque PV par rapport au rayonnement solaire. Le boîtier présente par exemple une face inclinée vers le haut supportant le panneau PV afin de maximiser la surface de ciel faisant face au panneau photovoltaïque PV.

Sur les figures 2A et 2B, le bloc d'alimentation D1 est situé sur le coffre CO. En variante, il peut être situ à distance du coffre CO.

Le système d'occultation comporte un circuit de contrôle 12 du moteur électrique formé par une ou plusieurs cartes de circuit. Ce circuit 12 est connecté au moteur 4 et au bloc batterie 8.

Le bloc batterie 8 est également destiné à fournir l'alimentation au circuit de contrôle 12. Le circuit de contrôle 12 assure la commande de l'actionneur en fonction des instructions reçus de l'utilisateur. Pour cela le circuit de contrôle 12 comporte une unité de communication externe permettant une liaison de communication avec un dispositif extérieur, notamment une communication par ondes radiofréquences. L'unité de communication peut être portée par une ou plusieurs des cartes de circuit du circuit de contrôle. Le dispositif extérieur de commande peut être, de manière non limitative, une télécommande, un téléphone intelligent ou smartphone en terminologie anglosaxonne ou une tablette.

L'unité de communication externe comprend notamment un émetteur-récepteur radiofréquence, par l'intermédiaire duquel des ordres de mouvement de l'écran peuvent être transmis depuis une télécommande radio non représentée, et des éléments de communication physique pour un utilisateur, comme une diode lumineuse ou LED et/ou un bouton de programmation.

Le circuit de contrôle 12 comporte une carte de circuit disposée de préférence dans le carter de l'actionneur.

De préférence le système d'occultation comporte également une interface homme-machine par exemple un écran et/ou un affichage lumineux de type diode lumineuse et/ou voire un émetteur sonore pour informer l'utilisateur de l'état de charge de la batterie, notamment lorsque la charge de la batterie est en dessous du seuil requis pour alimenter l'actionneur.

Le bloc d'alimentation D1 comporte également une unité d'interface d'alimentation électrique 14 configurée pour gérer l'alimentation électrique du bloc batterie 8 par le panneau photovoltaïque PV.

L'unité d'interface d'alimentation électrique 14 comporte un premier connecteur C1 par lequel l'unité d'interface 14 est connectée électriquement au panneau photovoltaïque PV par une liaison filaire 16. L'unité d'interface d'alimentation 14 est également connectée électriquement au bloc batterie 8 par une liaison filaire 18. L'unité d'interface 14 assure la recharge du bloc batterie 8, notamment en fonction du niveau de charge de la batterie. Par exemple, elle interrompt l'alimentation si la charge du bloc batterie 8 dépasse un seuil de charge donné et assure l'alimentation si la charge du bloc batterie 8 passe en dessous d'un seuil de décharge donné.

L'unité d'interface 14 comporte par exemple une carte de circuit comportant les composants électroniques permettant d'assurer la fonction de gestion de charge par le panneau photovoltaïque PV.

De préférence, l'unité d'interface 14 est logée dans le boîtier 9, et seule la liaison filaire 18 sort du boîtier pour être reliée à l'actionneur.

Le boîtier 9 est avantageusement étanche assurant la protection de l'unité d'interface face aux intempéries et à la poussière.

Selon l'invention, le bloc d'alimentation électrique comporte également un deuxième connecteur C2 destiné à connecter un dispositif d'alimentation externe D2 au système d'occultation. Le dispositif d'alimentation externe D2 est destiné à recharger le bloc batterie lorsque l'énergie électrique fournie par le dispositif d'alimentation à énergie solaire n'est pas suffisante pour recharger le bloc batterie. Cette situation peut avoir lieu par exemple en cas de mauvais temps prolongé et/ou d'utilisation intensive de l'actionneur du système d'occultation.

L'unité d'interface d'alimentation 14 est configurée pour assurer la recharge de la batterie par le dispositif d'alimentation D2 à la place ou en complément du panneau photovoltaïque PV.

Le dispositif d'alimentation externe D2 est un dispositif d'aliment permettant une recharge rapide. Par exemple le chargeur vendu sous la marque Oximo Wire-free^{®} est utilisable.

Le dispositif de recharge D2 peut être de type batterie externe appelée powerbank en terminologie anglosaxonne, ou un dispositif d'alimentation relié au réseau.

Le deuxième connecteur C2 est disposé sur le boîtier 9 de sorte à être facilement accessible à un utilisateur pour connecter le dispositif d'alimentation externe D2.

Grâce à l'invention, il n'est pas requis de devoir accéder à la batterie située dans l'actionneur ou à proximité pour pouvoir relier le dispositif de recharge externe à la batterie. Par exemple, le deuxième connecteur est situé en face avant, sur une face latérale ou une face inférieure du boîtier. Généralement, lorsque l'installation d'occultation est montée sur une fenêtre ou une porte-fenêtre, le deuxième connecteur est situé à l'extérieur de l'habitation. De manière préférée, des moyens d'obturation étanche du deuxième connecteur sont prévus pour protéger le deuxième connecteur de la pluie et/ou des poussières. Ces moyens d'obturation comportent par exemple un volet coulissant ou un bouchon. De préférence, les moyens d'obturation sont tels qu'ils sont le moins visibles possibles afin de dissimuler la présence du deuxième connecteur, celui-ci étant destiné à servir de manière très occasionnelle.

Dans un autre exemple de réalisation, le coffre comporte sur sa face avant un emplacement pour loger le bloc d'alimentation électrique, le boîtier pouvant alors formée par une partie du coffre. Le deuxième connecteur C2 est alors directement accessible à travers la face avant du coffre. Le coffre est par exemple moulé en matériau plastique et intègre directement les fenêtres et/ou évidements requis pour recevoir le boîtier du bloc d'alimentation électrique.

En variante le boîtier du dispositif d'alimentation est tel que le deuxième connecteur est accessible directement de l'intérieur du bâtiment et permettant une recharge même lorsque le volet est fermé.

Le deuxième connecteur C2 comporte par exemple un connecteur de type JST^{®} ou Molex^{®}. Dans un exemple de réalisation, le deuxième connecteur C2 peut être directement porté par la carte de circuit de l'unité d'interface d'alimentation.

Dans un autre exemple de réalisation, le deuxième connecteur C2 est relié à la carte de circuit de l'unité d'interface par un câble électrique. Il est alors envisagé que le caisson ou le boîtier comporte un logement fermé dans lequel sont logés le câble et le deuxième connecteur. Lors d'un besoin de recharge par le deuxième connecteur, le logement est ouvert et le câble est déroulé pour que le deuxième connecteur soit facilement accessible.

Dans un exemple de réalisation, l'unité d'interface est configurée pour que, lorsque le dispositif de charge externe est relié au deuxième connecteur C2, il charge le bloc batterie à la place ou en complément du panneau photovoltaïque. La gestion de la recharge du bloc batterie par le dispositif d'alimentation externe est également gérée par l'unité d'interface d'alimentation.

De manière particulièrement avantageuse, l'unité d'interface 14 comporte des moyens de protection électrique 15 du panneau photovoltaïque, plus particulièrement des cellules qui le composent contre le courant/ la tension délivrée par le dispositif d'alimentation externe. Ces moyens 15 comportent par exemple une diode montée de sorte à empêcher le courant fourni par le dispositif d'alimentation externe de circuler dans le panneau photovoltaïque. La diode est montée sur le circuit de carte de l'unité d'interface d'alimentation.

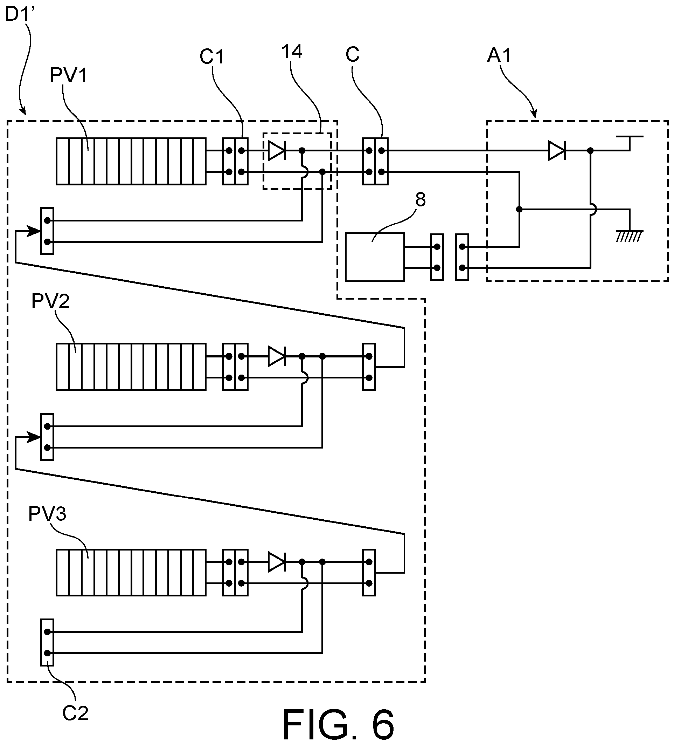

Sur la figure 6, on peut voir une représentation schématique d'un exemple de réalisation du bloc d'alimentation D1', dans lequel plusieurs panneaux photovoltaïques PV1, PV2 et PV3 sont mis en œuvre. Les panneaux sont avantageusement connectés électriquement, en parallèle. Avantageusement, le boîtier du boc d'alimentation est configuré pour permettre la mise en place de un ou plusieurs panneaux photovoltaïques en fonction des besoins. Dans cet exemple, le bloc batterie 8 est à l'extérieur de l'actionneur. L'actionneur est connecté au bloc d'alimentation D1' par un connecteur C. De plus dans cet exemple, des moyens pour empêcher le courant fourni par le dispositif d'alimentation externe de circuler dans les panneaux photovoltaïques sont prévus au niveau de chaque panneau formant ainsi des modules indépendants. En variante des moyens de protection communs peuvent être mis en œuvre.

Dans un exemple de réalisation particulièrement avantageux, le deuxième connecteur est un connecteur de type USB, très avantageusement de type USB-C^{®} configuré pour coopérer avec un dispositif d'alimentation externe compatible.

Le module d'interface USB peut être soit intégré au circuit de commande l'actionneur, soit à l'unité d'interface d'alimentation.

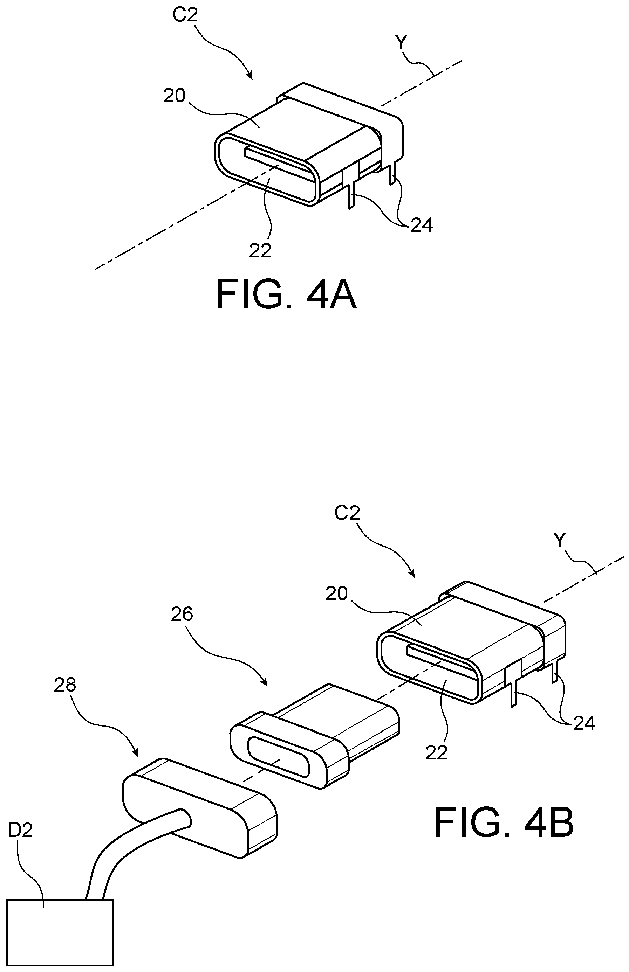

Le connecteur de type USB-C^{®} femelle représenté seul sur la figure 4A présente l'avantage d'avoir deux plans de symétrie orthogonaux, il est réversible et non polarisé, ce qui facilite la connexion au dispositif d'alimentation externe.

De manière très avantageuse et comme cela est représenté sur la figure 4B, le connecteur de recharge est lui-même connecté à un adaptateur magnétique 26, ce qui permet une connexion facilitée par exemple « en aveugle », notamment pour un connecteur en hauteur. Le connecteur 28 du dispositif d'alimentation externe D2 est également magnétique pour venir se connecter à l'adaptateur.

Le module d'interface USB est configuré pour supporter de manière préférée la technologie PD pour Power Delivery en terminologie anglo-saxonne ou Fourniture d'énergie, et encore plus préférée la technologie PD et la technologie PPS pour Programmable Power Supply en terminologie anglo-saxonne ou Alimentation programmable, associées à la norme USB version 3.0 et suivante.

La technologie de fourniture d'énergie PD permet de délivrer une puissance plus importante à la batterie et de réaliser des charges plus rapides qu'un connecteur non compatible avec cette technologie. Ceci est particulièrement adapté dans le cas de la présente invention où la recharge par le dispositif externe est exceptionnelle et qu'il est souhaitable qu'elle ait lieu très rapidement pour limiter le désagrément causé par la décharge du bloc batterie.

La technologie d'alimentation programmable PPS assure une communication renégociée régulièrement entre le bloc batterie et le dispositif d'alimentation externe, permettant que le dispositif d'alimentation puisse ajuster de manière dynamique la tension et le courant en fonction de l'état de charge de la batterie déterminée par l'actionneur. Régulièrement, l'ensemble de ces paramètres change pour s'adapter aux besoins de la batterie, ce qui permet d'optimiser sa charge, et d'allonger la durée de vie de la batterie.

Puisque la norme USB 3.0 PD PPS permet d'ajuster la puissance de charge selon le besoin de la batterie, il en résulte une surchauffe réduite, une plus longue durée de vie de la batterie et une recharge optimale.

Les technologies PD et PPS sont supportées par l'actionneur et par le dispositif d'alimentation externe.

Dans l'exemple représenté, la recharge par le panneau photovoltaïque PV et la recharge par le dispositif d'alimentation externe D2 ont lieu par la même connexion électrique entre l'unité d'interface 14 et le circuit de contrôle 12. En variante, des connexions électriques distinctes sont mises en œuvre.

Un exemple de déroulement d'une recharge de la batterie par un dispositif d'alimentation externe va maintenant être décrit.

Lorsque l'utilisateur constate que le système d'occultation ne fonctionne pas et/ou que l'interface homme-machine indique une décharge de la batterie, il accède au deuxième connecteur C2 à proximité du panneau photovoltaïque auquel il connecte le dispositif d'alimentation externe D2. L'opération de recharge de la batterie commence. Suivant le dispositif d'alimentation externe, la recharge peut être plus ou moins rapide. Il peut être envisagé une recharge uniquement partielle de la batterie qui est suffisante pour alimenter l'actionneur, la charge complète étant opérée par le panneau photovoltaïque. Lorsque la charge de la batterie atteint un seuil de recharge suffisant, l'interface homme-machine envoie l'information à l'utilisateur qui déconnecte le dispositif de recharge externe. Le système d'occultation est alors prêt à fonctionner et la recharge de la batterie s'effectue ensuite via le panneau photovoltaïque.

Il peut être envisagé que le système d'occultation puisse être activé alors que le dispositif d'alimentation externe est connecté et la batterie en cours de recharge.

Dans le cas d'un deuxième connecteur de type USB-C^{®} et une unité d'interface supportant la technologie de fourniture d'énergie PD, le temps de recharge de la batterie peut être sensiblement raccourci.

En outre, la mise en œuvre d'un connecteur USB-C^{®} est capable d'assurer un transfert de données.

Dans un exemple de réalisation, le module d'interface USB est alors configuré pour assurer ce transfert de données. Il est alors envisageable, lorsque le deuxième connecteur C2 n'est pas utilisé pour une recharge du bloc batterie, d'utiliser celui-ci pour connecter un dispositif externe pour recueillir des données et/ou pour configurer l'actionneur.

Par exemple, le dispositif externe peut être un dispositif de configuration du système, tel qu'un outil de réglage comprenant un ordinateur personnel ou un outil d'installation spécifique muni d'un port de sortie comprenant un connecteur USB-C^{®} compatible avec le port USB-C^{®} du deuxième connecteur C2. Par exemple, le dispositif externe sert au pilotage et à la configuration de l'actionneur en usine ou sur le site d'installation. Ainsi le connecteur de recharge peut être utilisé à la fois pour la recharge de la ou des batteries et pour le pilotage et la configuration de l'actionneur.

Un exemple d'échanges de données va maintenant être décrit.

L'unité de commande et/ou l'interface d'alimentation peuvent être en communication avec une station météorologique déportée à l'extérieur du bâtiment, incluant, notamment, un ou plusieurs capteurs pouvant être configurés pour déterminer, par exemple, une température, un niveau d'éclairement, ou encore une vitesse de vent. Ces informations sont utilisées pour gérer la recharge de la batterie et/ou l'utilisation de l'actionneur. Le capteur de température, le capteur de luminosité et/ou le capteur mesurant la vitesse de vent peut ou peuvent être intégré(s) directement au système d'occultation.

Les informations fournies par ces capteurs peuvent être récupérées par le dispositif externe connecté au connecteur USB-C^{®},

Très avantageusement, il est prévu un procédé d'alimentation utilisable également dans le cas où la batterie est complètement déchargée. Ce mode est appelé mode « dead battery » en terminologie anglo-saxonne. Dans ce cas de batterie déchargée, le procédé d'alimentation comprend une étape d'envoi, par le dispositif d'alimentation externe, d'une tension faible pour initier la communication avec l'actionneur. Par exemple la tension minimum pour initier la communication est de l'ordre de 5V. En particulier, cette étape d'envoi fait suite à une période prédéfinie suite à une connexion entre l'actionneur et le dispositif d'alimentation, pendant laquelle, le bloc batterie n'étant plus suffisamment chargée pour requérir un profil d'alimentation, aucune information n'est reçue par le dispositif d'alimentation.

Dans ce cas, l'étape d'envoi d'une tension minimale permet à l'actionneur d'initier l'étape de transmission de requête conforme au procédé d'alimentation.

Ce procédé est particulièrement adapté au système d'occultation selon l'invention puisque le dispositif d'alimentation externe est généralement mis en œuvre lorsque le bloc batterie est complètement déchargé.

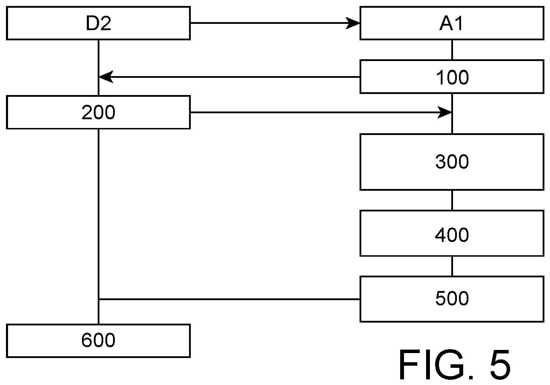

Un exemple du déroulement d'un procédé d'alimentation va maintenant être décrit à l'aide de la figure 5.

L'actionneur est tout d'abord connecté à un dispositif d'alimentation par le deuxième connecteur C2. Des échanges d'information entre l'unité d'interface et le dispositif d'alimentation se mettent alors en place.

Au cours d'une étape de demande de capacités 100, l'unité d'interface demande au dispositif d'alimentation ses capacités de charge. Celles-ci sont différentes s'il s'agit d'un dispositif d'alimentation branché sur secteur ou un panneau photovoltaïque. En effet, par exemple la puissance délivrable par le dispositif d'alimentation sur secteur est différente de celle délivrable par le panneau photovoltaïque. Elles sont également différentes en fonction des technologies avec lesquelles le dispositif d'alimentation est compatible, notamment les technologies PD et/ou PPS. Dans le cas de ce dispositif d'alimentation non compatible avec les technologies PD ou PPS, les valeurs de tension et de courant qui peuvent être transmises par le dispositif d'alimentation sont uniques et fixes.

Lors d'une étape 200, le dispositif d'alimentation répond à l'unité d'interface en fournissant une information sur ses capacités, au cours d'une étape de réponse. Alternativement, le dispositif d'alimentation fournit une tension et un courant disponibles au cours de cette étape de réponse.

Au cours d'une étape facultative d'évaluation 300, l'unité d'interface évalue les besoins de rechargement de la batterie, autrement dit les paramètres d'alimentation adaptés à la situation de la batterie. Cette étape a lieu lorsque l'unité d'interface supporte la technologie PPS.

Au cours d'une étape de sélection 400 et dans le cas où le dispositif d'alimentation a fourni une information sur ses capacités, l'unité d'interface choisit un profil de recharge en fonction de la réponse du dispositif d'alimentation. Le profil de recharge est avantageusement sélectionné parmi plusieurs profils correspondants aux capacités du dispositif d'alimentation et éventuellement selon l'information relative aux paramètres d'alimentation évalués. Dans un exemple de réalisation, l'unité d'interface sélectionne parmi les profils proposés par le dispositif d'alimentation, celui qui correspond le mieux aux besoins. Dans un autre exemple de réalisation, l'unité d'interface comprend également plusieurs couples courant/tension qui peuvent être choisis pour correspondre au mieux aux capacités du dispositif d'alimentation.

Au cours d'une étape de transmission 500, l'unité d'interface informe le dispositif d'alimentation du profil sélectionné par le biais d'une requête de profil d'alimentation. Lors d'une étape 600, le dispositif d'alimentation met ensuite en place le processus de charge suivant le profil sélectionné au cours d'une étape de charge.

Dans le cas alternatif où, suite à la connexion entre l'unité d'interface et le dispositif d'alimentation lors de l'étape 200 l'unité d'interface reçoit une tension et un courant directement du dispositif d'alimentation et avant l'étape de sélection, les étapes 300 à 600 sont omises et la recharge des batteries a lieu à partir des tension et courant disponibles en entrée du connecteur de recharge. Il peut alors avantageusement être prévu de mettre en place un retour d'information vers l'utilisateur pour signaler une recharge non optimale, par exemple par le biais d'un clignotement particulier de la diode luminescente de l'actionneur.

Le moteur de l'actionneur peut avantageusement tourner pendant la phase de recharge. En outre, grâce à l'invention, le type de dispositif d'alimentation est détectable par l'unité d'interface du fait de l'échange d'information, cette information permet également d'adapter le comportement de l'actionneur.

De plus, la communication entre le dispositif d'alimentation et l'unité d'interface permet une sélection du meilleur profil d'alimentation pour la charge de la batterie et donc une meilleure gestion de la charge.

Une communication mise en place entre le dispositif d'alimentation externe et l'unité d'interface permet à l'unité d'interface de détecter à quel type de dispositif d'alimentation il est connecté, soit un dispositif d'alimentation connecté au secteur, soit une batterie externe. La procédure de charge est alors adaptée au type de dispositif d'alimentation. Cette connaissance du type de dispositif d'alimentation par l'unité d'interface permet également d'adapter les retours d'informations fournis à l'utilisateur par exemple pour indiquer l'état de l'actionneur, par exemple en cours de charge ou chargé. Par exemple, dans le cas d'un dispositif d'alimentation externe branché sur le secteur l'unité d'interface fournit un retour d'information à l'utilisateur sur son état par exemple en charge ou chargé, par l'intermédiaire de voyants, par exemple de type LED, par déplacement sur l'écran et/ou par la transmission d'information vers un appareil muni d'un écran de visualisation. Dans le cas d'une charge par une batterie externe, l'émission d'un retour d'information dans le cas d'une charge par un panneau photovoltaïque est désactivée pour limiter la consommation électrique.

## Revendications

1. Système d'occultation comportant un actionneur pour l'entraînement entre plusieurs positions d'un écran de protection solaire ou d'occultation, et un bloc d'alimentation électrique dudit actionneur, ledit bloc d'alimentation étant disposé à l'extérieur de l'actionneur à distance de celui-ci, ledit bloc d'alimentation étant relié à l'actionneur par au moins un câble électrique, l'actionneur comprenant un moteur électrique (4), un réducteur (6), au moins une batterie (8) alimentant le moteur électrique, un circuit de contrôle (12), le bloc d'alimentation électrique étant configuré pour recharger la au moins une batterie électrique, ledit bloc d'alimentation comportant un boîtier, au moins un panneau photovoltaïque (PV) porté par au moins une face du boîtier, une unité d'interface d'alimentation électrique (14) configurée pour gérer la recharge de la batterie (8) par le panneau photovoltaïque (PV), **caractérisé en ce que** ledit panneau photovoltaïque (PV) est relié à l'unité d'interface d'alimentation électrique (14) par un premier connecteur (C1), **en ce que** le bloc d'alimentation électrique comporte également un deuxième connecteur (C2) relié à l'unité d'interface d'alimentation électrique (14) configuré pour au moins permettre la connexion à un dispositif d'alimentation externe permettant une recharge rapide afin de recharger la batterie électrique (8) à la place du panneau photovoltaïque (PV) ou avec le panneau photovoltaïque, le deuxième connecteur (C2) étant porté par le boîtier de sorte à être directement accessible de l'extérieur dudit boîtier, et **en ce que** le bloc d'alimentation comporte également des moyens de protection électrique (15) du panneau photovoltaïque (PV) par rapport au dispositif d'alimentation externe.

2. Système d'occultation selon la revendication 1, dans lequel le bloc d'alimentation électrique comporte des moyens de protection du deuxième connecteur (C2) contre l'eau et la poussière.

3. Système d'occultation selon la revendication 1 ou 2, dans lequel le deuxième connecteur (C2) est un connecteur répondant à la norme USB-C^{®}.

4. Système d'occultation selon la revendication 3, dans lequel le deuxième connecteur (C2) est configuré pour transmettre des informations suivant une technologie de fourniture d'énergie PD (Power Delivery en terminologie anglo-saxonne) et éventuellement selon une technologie d'alimentation programmable PPS (Programmable Power Supply en terminologie anglo-saxonne).

5. Système d'occultation selon la revendication 3 ou 4, dans lequel le deuxième connecteur (C2) est configuré pour connecter un dispositif de configuration et pour permettre un échange de données entre le dispositif de configuration et le circuit de contrôle (12) et/ou l'unité d'interface (14).

6. Système d'occultation selon la revendication 5, comportant au moins un capteur d'au moins une condition extérieure, par exemple le niveau d'éclairement ou la température, et dans lequel le système est configuré pour transmettre les données au dispositif de configuration via le deuxième connecteur (C2).

7. Système d'occultation selon l'une des revendications précédentes, dans lequel le dispositif d'alimentation comporte plusieurs panneaux photovoltaïques connectés en parallèle.

8. Installation d'occultation comportant un système d'occultation selon l'une des revendications précédentes, un écran solidarisé à l'actionneur (A1) pour être entraîné par celui-ci, un coffre (CO) logeant l'actionneur (A1) et au moins en partie l'écran, et dans laquelle le bloc d'alimentation électrique est disposé au moins en partie à l'extérieur du coffre de sorte que le panneau photovoltaïque (PV) soit soumis au rayonnement lumineux.

9. Installation d'occultation selon la revendication 8, dans laquelle la disposition du bloc d'alimentation électrique est telle que le deuxième connecteur (C2) est accessible de l'extérieur du coffre.

10. Installation d'occultation selon la revendication 9, dans laquelle le boîtier (9) est fixé sur une face extérieure du coffre (CO) ou est destiné à être fixé sur un vitrage destine à être occulté.

11. Installation d'occultation selon la revendication 9, dans laquelle le boîtier (9) est formé par une partie dudit coffre (CO).

## Patentansprüche

1. Verdunkelungssystem, umfassend einen Aktuator zum Antrieb zwischen mehreren Positionen eines Sonnenschutz- oder Verdunkelungsschirms und ein Netzteil für den Aktuator, wobei das Netzteil außerhalb des Aktuators in einem Abstand davon angeordnet ist, wobei das Netzteil über mindestens ein Stromkabel mit dem Aktuator verbunden ist, der Aktuator umfassend einen Elektromotor (4), ein Untersetzungsgetriebe (6), mindestens eine Batterie (8), die den Elektromotor mit Strom versorgt, eine Steuerschaltung (12), wobei das Netzteil konfiguriert ist, um die mindestens eine elektrische Batterie aufzuladen, das Netzteil umfassend ein Gehäuse, mindestens ein Solarmodul (PV), das von mindestens einer Seite des Gehäuses getragen wird, eine Stromversorgungsschnittstelleneinheit (14), die konfiguriert ist, um das Aufladen der Batterie (8) durch das Solarmodul (PV) zu managen, **dadurch gekennzeichnet, dass** das Solarmodul (PV) durch einen ersten Verbinder (C1) mit der Stromversorgungsschnittstelleneinheit (14) verbunden ist, dass das Netzteil auch einen zweiten Verbinder (C2) umfasst, der mit der Stromversorgungsschnittstelleneinheit (14) verbunden und konfiguriert ist, um zumindest die Verbindung mit einer externen Stromversorgungsvorrichtung zu ermöglichen, die ein schnelles Aufladen ermöglicht, um die elektrische Batterie (8) anstelle des Solarmoduls (PV) oder mit dem Solarmodul aufzuladen, wobei der zweite Verbinder (C2) von dem Gehäuse getragen wird, um direkt von außerhalb des Gehäuses zugänglich zu sein, und dass die Netzteil auch Stromschutzeinrichtungen (15) des Solarmodul (PV) in Bezug auf die externe Stromversorgungsvorrichtung umfasst.

2. Verdunkelungssystem nach Anspruch 1, wobei das Netzteil Schutzeinrichtungen des zweiten Verbinders (C2) vor Wasser und Staub umfasst.

3. Verdunkelungssystem nach Anspruch 1 oder 2, wobei der zweite Verbinder (C2) ein Verbinder ist, der dem Standard USB-C^{®} entspricht.

4. Verdunkelungssystem nach Anspruch 3, wobei der zweite Verbinder (C2) konfiguriert ist, um Informationen gemäß einer Energieversorgungstechnologie PD (Power Delivery) und möglicherweise gemäß einer programmierbaren Energieversorgungstechnologie PPS (Programmable Power Supply) zu übertragen.

5. Verdunkelungssystem nach Anspruch 3 oder 4, wobei der zweite Verbinder (C2) konfiguriert ist, um eine Konfigurationsvorrichtung zu verbinden und um einen Datenaustausch zwischen der Konfigurationsvorrichtung und der Steuerschaltung (12) und/oder der Schnittstelleneinheit (14) zu ermöglichen.

6. Verdunkelungssystem nach Anspruch 5, umfassend mindestens einen Sensor für mindestens eine äußere Bedingung, beispielsweise den Helligkeitsgrad oder die Temperatur, und wobei das System konfiguriert ist, um die Daten über den zweiten Verbinder (C2) an die Konfigurationsvorrichtung zu übertragen.

7. Verdunkelungssystem nach einem der vorherigen Ansprüche, wobei die Stromversorgungsvorrichtung mehrere parallel verbundene Solarmodule umfasst.

8. Verdunkelungsanlage, umfassend ein Verdunkelungssystem nach einem der vorherigen Ansprüche, einen Schirm, der fest mit dem Aktuator (A1) verbunden ist, um von diesem angetrieben zu werden, einen Kasten (CO), der den Aktuator (A1) und zumindest teilweise den Schirm aufnimmt, und wobei das Netzteil zumindest teilweise außerhalb des Kastens angeordnet ist, sodass das Solarmodul (PV) der Lichtstrahlung ausgesetzt ist.

9. Verdunkelungsanlage nach Anspruch 8, wobei die Anordnung des Netzteils derart ist, dass der zweite Verbinder (C2) von der Außenseite des Kastens zugänglich ist.

10. Verdunkelungsanlage nach Anspruch 9, wobei das Gehäuse (9) an einer Außenseite des Kastens (CO) befestigt ist oder dazu bestimmt ist, an einer Verglasung befestigt zu werden, die dazu bestimmt ist, abgedeckt zu werden.

11. Verdunkelungsanlage nach Anspruch 9, wobei das Gehäuse (9) durch einen Teil des Kastens (CO) gebildet ist.

## Claims

1. A concealment system comprising an actuator for driving between several positions of a solar protection or concealment screen, and an electrical power supply unit of said actuator, said power supply unit being arranged outside the actuator remotely therefrom, said power supply unit being connected to the actuator by at least one electric cable, the actuator comprising an electric motor (4), a reduction gear (6), at least one battery (8) powering the electric motor, a control circuit (12), the electrical power supply unit being configured to recharge the at least one electric battery, said power supply unit comprising a housing, at least one photovoltaic panel (PV) carried by at least one face of the housing, a power supply interface unit (14) configured to manage the recharging of the battery (8) by the photovoltaic panel (PV), **characterized in that** said photovoltaic panel (PV) is connected to the power supply interface unit (14) by a first connector (C1), **in that** the electrical power supply unit also has a second connector (C2) connected to the power supply interface unit (14) configured to at least allow connection to an external power supply device allowing rapid recharging so as to recharge the electric battery (8) in place of the photovoltaic panel (PV) or with the photovoltaic panel, the second connector (C2) being carried by the housing so as to be directly accessible from the outside of said housing, and **in that** the power supply unit also comprises means of electrical protection (15) of the photovoltaic panel (PV) with respect to the external power supply device.

2. The concealment system according to claim 1, wherein the electrical power supply unit comprises means for protecting the second connector (C2) against water and dust.

3. The concealment system according to claim 1 or 2, wherein the second connector (C2) is a connector meeting the USB-C^{®} standard.

4. The concealment system according to claim 3, wherein the second connector (C2) is configured to transmit information according to a PD (Power Delivery) energy supply technology and optionally according to PPS (Programmable Power Supply) technology.

5. The concealment system according to claim 3 or 4, wherein the second connector (C2) is configured to connect a configuration device and to allow an exchange of data between the configuration device and the control circuit (12) and/or the interface unit (14).

6. The concealment system according to claim 5, comprising at least one sensor of at least one external condition, for example the level of illumination or the temperature, and wherein the system is configured to transmit the data to the configuration device via the second connector (C2).

7. The concealment system according to one of the preceding claims, wherein the power supply device comprises several photovoltaic panels connected in parallel.

8. A concealment installation comprising a concealment system according to one of the preceding claims, a screen secured to the actuator (A1) to be driven by it, a box (CO) housing the actuator (A1) and at least partly the screen, and wherein the electrical power supply unit is arranged at least partly outside the box so that the photovoltaic panel (PV) is subjected to light radiation.

9. The concealment installation according to claim 8, wherein the arrangement of the electrical power supply unit is such that the second connector (C2) is accessible from outside the box.

10. The concealment installation according to claim 9, wherein the housing (9) is attached on an exterior face of the box (CO) or is intended to be attached on a glazing intended to be concealed.

11. The concealment installation according to claim 9, wherein the housing (9) is formed by a part of said box (CO).
